# EUROPEAN PATENT SPECIFICATION

(11) **EP 3 157 747 B1**
(45) Date of publication and mention of the grant of the patent: **03.11.2021**
(21) Application number: 15807077.1
(22) Date of filing: 01.04.2015
(51) Int. Cl.: B32B 9/00, A41D 1/00, B32B 5/06, B32B 5/08, B32B 5/24, B32B 25/12, B32B 25/14, B32B 25/16

(54) **LAMINATED MATERIAL**
LAMINIERTES MATERIAL
MATÉRIAU STRATIFIÉ

(30) Priority: 11.06.2014 MY PI2014701553
(43) Date of publication of application: 26.04.2017
(73) Proprietor: Cleary Dolcetti, Joseph, Kuala Lumpur 59100 (MY)
(72) Inventor: Cleary Dolcetti, Joseph, Kuala Lumpur 59100 (MY)
(74) Representative: v. Bezold & Partner Patentanwälte - PartG mbB
(86) International application number: PCT/MY2015/050021
(87) International publication number: WO 2015/190913

(56) References cited:
- EP-A1- 2 531 054
- US-A- 5 865 776
- US-A1- 2002 056 502
- US-A1- 2003 106 129
- US-A1- 2004 031 246
- US-A1- 2005 034 686
- US-A1- 2011 016 610
- US-A1- 2013 116 613
- US-B1- 6 861 379
- US-B1- 6 861 379

## Description

### FIELD OF INVENTION

This invention relates to laminated materials, particularly for use as materials for making garments, especially exercise and sportswear and, more especially exercise and sports training wear.

### BACKGROUND TO THE INVENTION

For the purposes of this specification the word "garment" is to be understood as referring not only to complete garments but also to parts of articles, such as arm or leg coverings.

Exercise and sportswear exists in many forms depending on the activity involved. For some activities, such as golf, ordinary casual clothing can be worn but for other sporting or training activities, such as military exercise training, martial arts, weight training and many other activities sport playing or training, it is desirable that specially designed clothing and clothing materials are used. While attempts have been made to idealise the properties of the materials used to make the garments, no material has so far been available that has the properties that make it universably usable in the manufacture of a wide range of exercise and sportswear .

The general technical background of the invention also includes US 6 861 379 B1, US 2011/016610 A1 and US 2013/116613 A1.

Finally, EP 2 531 054 A1 discloses a laminated material for clothing according to the preamble of claim 1. However, this material is not entirely satisfactory. Therefore, it is an object of the invention to provide an improved material. This object is achieved by a new material according to claim 1.

### SUMMARY OF THE INVENTION

This invention provides a material that fulfills the desired requirements of material for making exercise and sportswear for use in a wider range of specific activities to a far greater degree than any material that has hitherto been available.

According to the invention, a laminated material for clothing comprises at least three layers of flexible elastic material, a first, outer, layer comprising a material with a plush surface having a multitude of mini-loops for forming a hook and loop connection with a material, which does not form part of the material of the invention, having a surface having a multitude of mini-hooks, an intermediate layer and a third, inner, layer of a non-allergenic material, wherein the material is omnidirectionally stretchable, has moisture wicking and antimicrobial properties and is non-allergenic and has no undesirable skin effects and at least one layer is perforated and wherein the strength of the material is such that articles can be attached to the outer surface of a garment made from the material without dragging the garment out of shape.

The material should also be such that garments made from it should provide a compression effect while still being functional and easy to put on and take off and move around in comfortably

Preferably the material is through perforated.

Preferably, the first layer is an unbrushed loop UBL OK plush cloth to which can be attached articles that have a surface covering, or are encased within a pouch or the like, of a flexible material with surface mini Velcro-type loops. Such articles may be, for example, training weights, bio sensors for heart rate, force, speed, calorific output, or acceleration, pedometers, inertia gauges, GPS units, protective padding for various body parts, such as soccer shin guards, or personal music or communication devices.

The outer layer has a thickness between 1 and 5 mm.

The intermediate layer is preferably an open or closed cell natural or synthetic rubber and is advantageously neoprene. It may vary in thickness depending on the purpose for which the material is to be used. It is between 0.5 and 5 mm thick.

The inner layer is preferably a nylon/spandex blend, which has inherent anti-microbial properties and moisture wicking properties or has been treated to have such properties. It may be a woven or knitted material, if desired. Its thickness is less than 2 mm.

Preferably, the inner layer is a moisture wicking layer.

The material of the invention is preferably produced by applying adhesive to the layer materials and pressing the layers between rollers.

The invention also provides a garment or a part of a garment preferably a sportswear garment produced from the material according to the invention. For the purposes of this specification the word garment means anything that can be worn on or wrapped around the entire human body or a part thereof, such as a limb or part of a limb or the head or part of the head. Thus a garment can be, for example, something that can be wrapped around an arm, leg, hand or foot or a part of an arm or a leg or be a hood or a hat.

## Claims

1. A laminated material for clothing comprising at least three layers of flexible elastic material,
a) a first, outer layer comprising a material with a plush surface having a multitude of mini-loops for forming a hook and loop connection with a material, which does not form part of the material of the invention, having a surface having a multitude of mini-hooks,
b) an intermediate layer, and
c) a third, inner layer of a material, which
c1) is omnidirectionally stretchable,
c2) has moisture wicking properties,
c3) is non-allergenic and
c4) has no undesirable skin effects and
c5) wherein the strength of the material is such that articles can be attached to the outer surface of a garment made from the material without dragging the garment out of shape,
d) wherein at least one of the layers is perforated,
**characterized in that**
e) the material of the inner layer has antimicrobial properties and
f) the outer layer has a thickness between 1 and 5 mm, the intermediate layer has a thickness between 0.5 and 5 mm and the inner layer has a thickness of less than 2 mm.

2. A material according to claim 1, wherein the first layer is an unbrushed loop UBL OK cloth.

3. A material according to claim 1 or claim 2, wherein the intermediate layer is an open or closed cell natural or synthetic rubber.

4. A material according to any one of claims 1 to 3, wherein the intermediate layer is neoprene.

5. A material according to any one of claims 1 to 4, wherein the inner layer is a nylon/spandex blend.

6. A material according to any one of claims 1 to 5, wherein the inner layer is a woven material.

7. A material according to any one of claims 1 to 6, wherein the inner layer is a moisture wicking layer.

8. A material according to claim 7, wherein perforations pass wholly through the material.

9. A garment or a part of a garment produced from a material according to any one of claims 1 to 8.

10. An exercise or sportswear garment or a part thereof according to claim 9.

## Patentansprüche

1. Laminiertes Material für Kleidung, das mindestens drei Schichten aus flexiblem, elastischem Material umfasst,
a) eine erste, äußere Schicht, die ein Material mit einer Plüschoberfläche mit einer Vielzahl von Minischlaufen zur Bildung einer Klettverbindung mit einem Material umfasst, das nicht Teil des erfindungsgemäßen Materials ist und eine Oberfläche mit einer Vielzahl von Minihaken aufweist,
b) eine Zwischenschicht, und
c) eine dritte, innere Schicht aus einem Material, das
c1) omnidirektional dehnbar ist,
c2) feuchtigkeitstransportierende Eigenschaften hat,
c3) nicht allergen ist und
c4) keine unerwünschten Auswirkungen auf die Haut hat und
c5) wobei die Festigkeit des Materials so ist, dass Gegenstände an der Außenfläche eines aus dem Material hergestellten Kleidungsstücks befestigt werden können, ohne dass das Kleidungsstück aus der Form gezogen wird,
d) wobei mindestens eine der Schichten perforiert ist,
**dadurch gekennzeichnet, dass**
e) das Material der inneren Lage antimikrobielle Eigenschaften aufweist und
f) die äußere Schicht eine Dicke zwischen 1 und 5 mm, die Zwischenschicht eine Dicke zwischen 0,5 und 5 mm und die innere Schicht eine Dicke von weniger als 2 mm aufweist.

2. Material nach Anspruch 1, wobei die erste Schicht ein ungebürstetes Schlingengewebe UBL OK ist.

3. Material nach Anspruch 1 oder Anspruch 2, wobei die Zwischenschicht ein offen- oder geschlossenzelliger Natur- oder Synthesekautschuk ist.

4. Material nach einem der Ansprüche 1 bis 3, wobei es sich bei der Zwischenschicht um Neoprene handelt.

5. Material nach einem der Ansprüche 1 bis 4, wobei die innere Schicht eine Nylon-/Elasthan-Mischung ist.

6. Material nach einem der Ansprüche 1 bis 5, bei dem die Innenschicht ein gewebtes Material ist.

7. Material nach einem der Ansprüche 1 bis 6, wobei die innere Schicht eine feuchtigkeitsableitende Schicht ist.

8. Material nach Anspruch 7, wobei die Perforationen vollständig durch das Material verlaufen.

9. Kleidungsstück oder ein Teil eines Kleidungsstücks, hergestellt aus einem Material nach einem der Ansprüche 1 bis 8.

10. Kleidungsstück oder ein Teil eines Kleidungsstücks nach Anspruch 9.

## Revendications

1. Matériau stratifié pour vêtements comprenant au moins trois couches de matériau élastique flexible,
a) une première couche extérieure comprenant un matériau avec une surface pelucheuse ayant une multitude de mini-boucles pour former une connexion à crochets et boucles avec un matériau, qui ne fait pas partie du matériau de l'invention, ayant une surface ayant une multitude de mini-crochets,
b) une couche intermédiaire, et
c) une troisième couche intérieure d'un matériau qui
c1) est étirable de manière omnidirectionnelle,
c2) possède des propriétés d'évacuation de l'humidité,
c3) est non-allergénique et
c4) n'a pas d'effets indésirables sur la peau et
c5) dans lequel la résistance du matériau est telle que des articles peuvent être fixés à la surface extérieure d'un vêtement fabriqué à partir du matériau sans déformer le vêtement,
d) dans lequel au moins une des couches est perforée,
**caractérisé en ce que**
e) le matériau de la couche intérieure a des propriétés antimicrobiennes et
f) la couche extérieure a une épaisseur comprise entre 1 et 5 mm, la couche intermédiaire a une épaisseur comprise entre 0,5 et 5 mm et la couche intérieure a une épaisseur inférieure à 2 mm.

2. Matériau selon la revendication 1, dans lequel la première couche est un tissu UBL OK à boucles non brossées.

3. Matériau selon la revendication 1 ou la revendication 2, dans lequel la couche intermédiaire est un caoutchouc naturel ou synthétique à cellules ouvertes ou fermées.

4. Matériau selon l'une quelconque des revendications 1 à 3, dans lequel la couche intermédiaire est du néoprène.

5. Matériau selon l'une quelconque des revendications 1 à 4, dans lequel la couche interne est un mélange nylon/spandex.

6. Matériau selon l'une quelconque des revendications 1 à 5, dans lequel la couche interne est un matérial tissé.

7. Matériau selon l'une quelconque des revendications 1 à 6, dans lequel la couche interne est une couche d'absorption de l'humidité.

8. Matériau selon la revendication 7, dans lequel les perforations traversent entièrement le matériau.

9. Vêtement ou partie de vêtement produit à partir d'un matériau selon l'une quelconque des revendications 1 à 8.

10. Vêtement d'exercice ou de sport ou une partie de celui-ci selon la revendication 9.
